# EUROPÄISCHE PATENTSCHRIFT

(11) **EP 2 301 773 B1**
(45) Veröffentlichungstag und Bekanntmachung des Hinweises auf die Patenterteilung: **06.06.2012**
(21) Anmeldenummer: 10009467.1
(22) Anmeldetag: 11.09.2010
(51) Int. Cl.: B60G 17/027, B60G 15/06, B60G 17/04, F16F 9/06, B60G 17/044, F16F 15/027, F16F 13/00

(54) **Verstellbares Federbein**
Adjustable suspension strut
Jambe de force réglable

(30) Priorität: 28.09.2009 DE 102009045051
(43) Veröffentlichungstag der Anmeldung: 30.03.2011
(73) Patentinhaber: ZF Friedrichshafen AG, 80846 Friedrichshafen (DE)
(72) Erfinder: Bender, Burkard, 57539 Fürthen (DE); Beck, Hubert, 53783 Eitorf (DE)

(56) Entgegenhaltungen:
- DE-A1- 2 806 203
- DE-A1- 3 900 899
- JP-A- 3 143 795
- JP-A- 53 116 625
- JP-A- 2007 030 665
- JP-A- 2008 128 428
- US-A- 5 181 696

## Beschreibung

Die Erfindung betrifft ein verstellbares Federbein gemäß dem Oberbegriff von Patentanspruch 1.

Aus der DE 195 10 032 C2 ist ein verstellbares Federbein bekannt, bei dem ein Federteller des Federbeins mittels eines Elektromotors axial verstellbar ist. Der Elektromotor als Aktuator muss derart dimensioniert sein, dass eine einzelne Feder vorspannbar ist, um die erforderliche Traglast abstützen zu können. Damit ist u. U. ein für den Stromhaushalt eines Fahrzeugs spürbarer Strombedarf verbunden.

Die DE 10 2005 001 736 B3 beschreibt einen Federträger, bei dem zwei Federn eingesetzt werden. Eine erste Feder sorgt für eine Grundlast und eine zweite Feder stützt dynamische Belastungen ab, die bei einer Federungsbewegung auftreten. Durch die Axialverstellung eines Federtellers für die zweite Feder kann der Energiebedarf des Aktuators reduziert werden.

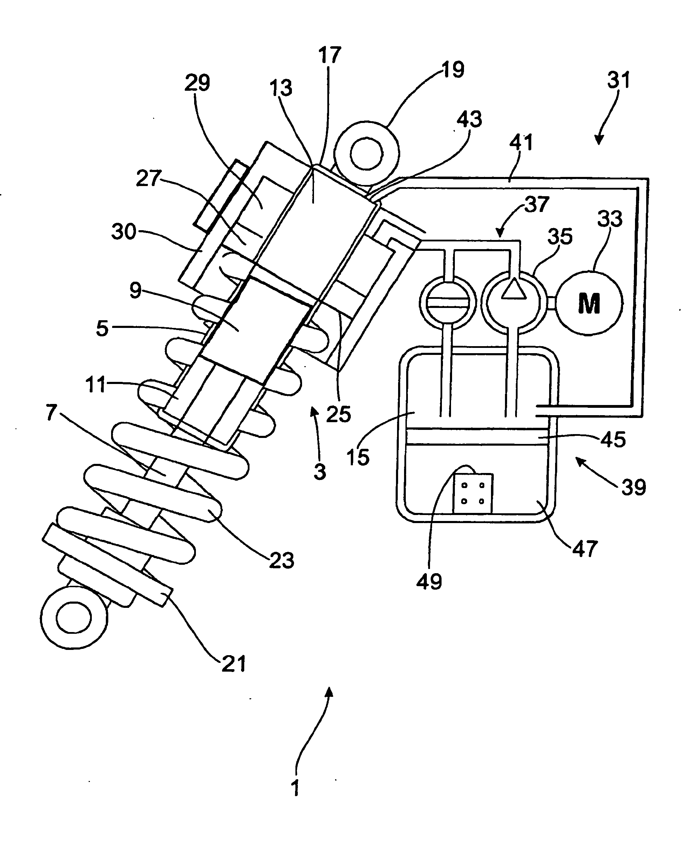

Die DE 195 29 580 C2 betrifft ein verstellbares Federbein, bei dem ein Federteller mit einem hydraulisch betätigten Kolben in Wirkverbindung steht. Dazu verfügt das Federbein über eine Hydraulikkammer, die von einer Außenwandung eines Schwingungsdämpfers und einem Außenzylinder, an dem der Federteller befestigt ist, gebildet wird. Der Schwingungsdämpfer stellt ein in sich abgeschlossenes Bauteil dar, das gemäß Fig. 2 der DE 195 29 580 C2 zwei mit einem hydraulischen Medium gefüllte Arbeitsräume aufweist, denen in Reihe ein mit Gas gefüllter Ausgleichsraum zugeordnet ist. Zwischen dem Ausgleichsraum und einem Hohlraum zur Druckmediumverteilung in die Hydraulikammer ist ein Deckel fixiert. Über die Ausgestaltung der Druckversorgungseinrichtung ist nichts offenbart.

Aus der JP 2008 128428 A ist ein verstellbares Federbein mit einer Feder bekannt. Ein die Feder tragender Federteller ist über einen volumenveränderlichen Hydraulikraum in seiner axialen Position verstellbar. Des Weiteren verfügt das Federbein über einen Ausgleichsraum, der das von der Kolbenstange verdrängte Dämpfmediumvolumen kompensiert und eine im Federbein angeordnete Pumpe.

Die JP 2007 030665 A beschreibt ein Federbein, das in einem äußeren Zylinder axial beweglich angeordnet ist. An dem Federbein ist ein Federteller für eine Fahrzeugtragfeder befestigt. Durch die Befüllung des äußeren Zylinders mit Druckmedium wird der Schwingungsdämpfer im Zylinder axial verschoben und somit die Vorspannung einer Feder verändert. Der Schwingungsdämpfer selbst stellt eine in sich abgeschlossene Baueinheit dar, die keine Strömungsverbindung zu dem äußeren Zylinder oder einem Speicher einer Pumpeinrichtung aufweist.

Aufgabe der vorliegenden ist ein verstellbares Federbein zu realisieren, das mit einem vergleichsweise geringen Energiebedarf betreibbar ist.

Erfindungsgemäß wird die Aufgabe durch die Merkmale des Patentanspruchs 1 gelöst.

Die Druckvorspannung übernimmt praktisch einen Traganteil, die die Feder zu leisten hat. Mit der Pumpe muss im Minimum nur noch der Traganteil der Feder bereitgestellt werden, der sich durch die angestrebte Traglast bei einer vorgegebenen Niveaulage eines Fahrzeugs ergibt. Bei verschiedenen Schwingungsdämpferbauformen, insbesondere bei einem so genannten Einrohrschwingungsdämpfer, wird die Dämpfkraft über das Druckniveau im Ausgleichsraum abgestützt. Diese Abstützfunktion übernimmt damit der Speicher. Das Dämpfmedium im Schwingungsdämpfer ist mit dem Druckmedium im Hydraulikversorgungssystem identisch.

Gerade dann, wenn die Abstützkraft der Feder größer sein soll, um die die Konstruktionslage einzuhalten, nämlich bei einer Einfederungsbewegung, wird auch über die Kolbenstangenbewegung Dämpfmedium = Druckmedium in den Hydraulikraum gefördert und damit die Vorspannung der Feder durch die Verschiebebewegung des Kolbens im Hydraulikraum vergrößert. Dieser Effekt wirkt sich ebenfalls Energiebedarfs optimierend für das Federbein aus.

Dieser Effekt kann noch gesteigert werden, wenn ab einer definierten Einfahrposition der Kolbenstange das druckvorgespannte Volumen ein Maximum einnimmt und bei einer weiteren Kolbenstangeneinfahrbewegung das verdrängte Volumen gegen die Kraft der Feder vom sich vergrößernden Hydraulikraum aufgenommen wird. Das Volumen des Speichers kann durch diese Maßnahme auf ein Minimum begrenzt werden.

Das druckvorgespannte Volumen wird über einen Trennkolben zu einem Vorspannelement separiert. Als Vorspannelement kann z. B. eine Gasfüllung in einem Druckraum dienen.

Der Trennkolben kann mit einem Anschlag zusammenwirken, der das Maximum des druckvorgespannten Volumens bestimmt. Über diesen Anschlag wird der Umpumpeffekt des Schwingungsdämpfers in den Hydraulikraum eingeleitet.

Zur Vermeidung von Anschlaggeräuschen wird der Anschlag von einem Federelement, z. B. einem elastischen Kunststoffelement, gebildet.

Des Weiteren kann vorgesehen sein, dass in der ersten Anschlussleitung die Pumpe und dazu parallel ein schaltbares Blockierventil angeordnet sind. Das Blockierventil dient dazu, bei Ausfall der Pumpe die Position des verstellbaren Federtellers zu fixieren.

In weiterer vorteilhafter Ausgestaltung wird das schaltbare Blockierventil in die Durchlassrichtung geschaltet, wenn die Energieversorgung für die Pumpe gesichert ist.

Anhand der folgenden Figurenbeschreibung soll die Erfindung näher erläutert werden.

Die einzige Figur zeigt ein verstellbares Federbein 1, für eine beliebige Anwendung, mit einem Schwingungsdämpfer 3, der einen Zylinder 5 umfasst, in dem eine Kolbenstange 7 mit einem Kolben 9 eine axiale Betriebsbewegung ausführt. Der Zylinder 5 ist vollständig mit einem hydraulischen Dämpfmedium gefüllt, wobei der Kolben 9 den Zylinder 5 in einen kolbenstangenseitigen und einen kolbenstangenfernen Arbeitsraum 11; 13 unterteilt. Im Kolben 9 ist pro Bewegungsrichtung mindestens ein Dämpfventil beliebiger Bauart ausgeführt, wobei das Dämpfventil auch willkürlich verstellbar sein kann. Das von der Kolbenstange 7 verdrängte Dämpfmediumvolumen wird von einem außerhalb des Zylinders 5 befindlichen größenveränderlichen Ausgleichsraum 15 kompensiert.

An dem Zylinder 5 ist an einem Boden 17 ein Anschlussorgan 19, beispielsweise ein Ringgelenk befestigt. Die Kolbenstange 7 steht in ortsfester Wirkverbindung mit einem ersten Federteller 21 für eine Feder 23. Ein zweiter Federteller 25 verfügt über eine zylinderseitige Abstützung, wobei der zweite Federteller 25 axialverschiebbar zum Zylinder 5 ausgeführt ist. Der zweite Federteller 25 steht in Verbindung mit einem axial beweglichen ringförmigen Kolben 27 innerhalb eines Hydraulikraums 29, umschlossen von einem am Zylinder 5 fixierten Gehäuse 30, das den Zylinder 5 auf einem Längenabschnitt einhüllt. Der Hydraulikraum 29 ist mit einem Hydraulikversorgungssystem 31 verbunden, das einen Motor 33 und eine Pumpe 35 umfasst, die über eine erste Anschlussleitung 37 aus einem Speicher 39 Druckmedium bedarfsgerecht in den Hydraulikraum 29 fördert, um eine Verstellbewegung des zweiten Federtellers 25 anzusteuern. Über die Verstellbewegung des zweiten Federtellers 25 kann die Vorspannung der Feder 23 zwischen den beiden Federtellern 21; 25 einer äußeren Belastung angepasst werden, um eine definierte Kolbenstangenposition zu unterstützen.

Der Speicher 39 ist der Pumpe 35 vorgeschaltet und verfügt über eine Druckvorspannung. Auch der Ausgleichsraum 15 des Schwingungsdämpfers 3 ist an den Speicher des Hydrauliksystems 31 angeschlossen, wobei bei diesem Ausführungsbeispiel die Funktion des Ausgleichsraums 15 und die Funktion des Speichers 39 für das Hydraulikversorgungssystem 31 von einem einzigen druckvorgespannten Volumen ausgeführt wird. Dazu besteht eine zweite Anschlussleitung 41 zwischen dem Speicher 39 bzw. dem druckvorgespannten Volumen und dem kolbenstangenfernen Arbeitsraum 13 des Schwingungsdämpfers 3. Das Dämpfmedium im Schwingungsdämpfer 3 und das Druckmedium zur Verstellung des zweiten Federtellers 25 sind identische Hydraulikmedien. Im Boden 17 des Zylinders 5 ist eine Anschlussöffnung 43 ausgeführt. Prinzipiell kann der Anschluss auch im kolbenstangenseitigen Arbeitsraum 11 ausgeführt sein. Das druckvorgespannte Volumen wird über einen Trennkolben 45 zu einem Vorspannelement separiert. Dieses Vorspannelement kann von einer mechanischen Feder oder auch einem Gasraum 47 gebildet werden.

Je nach Auslegung der Größe des Speichers 39 und dem Verhältnis der Druckvorspannung am Trennkolben 45 und der Vorspannung der Feder 23 zwischen den Federtellern 21; 25 nimmt das druckvorgespannte Volumen bei der definierten 5 Einfahrposition der Kolbenstange 7 ein Maximum ein, wobei bei weiterer Kolbenstangenbewegung das Hydraulikmedium über die beiden Anschlussleitungen 37, 41 vom kolbenstangenfernen Arbeitsraum 13 in den Hydraulikraum 29 gefördert wird. Man kann vorsehen, dass der Trennkolben 45 mit einem Anschlag 49 außerhalb des druckvorgespannten Volumens bzw. des Ausgleichsraums zusammenwirkt, der das Maximum des druckvorgespannten Volumens bestimmt. Der Energiebedarf für die Pumpe 35 wird gesenkt, da die Einfahrbewegung der Kolbenstange auf das Druckmedium eine Pumpbewegung ausübt. Um Anschlaggeräusche zu vermeiden kann der Anschlag 49 von einem Federelement, z. B. einer Elastomerfeder gebildet werden. Der Mindestabstand zwischen dem Anschlag 49 und dem Trennkolben 45 bestimmt sich aus der thermischen Volumenänderung des druckvorgespannten Volumens und dem Volumen im Schwingungsdämpfer 3 und den Anschlussleitungen 37; 41.

Wenn die statische Last, die auf das Federbein 1 wirkt, ein vorbestimmtes Maß überschreitet und das Federbein 1 deshalb die Last nicht der angestrebten Niveaulage halten kann, dann kann über die Pumpe 35 Hydraulikmedium aus dem Speicher 39 in den Hydraulikraum 29 gefördert werden. Damit die Pumpe 35 nur eine geringere Energie aufnehmen muss, um gegen die Kraft der Feder 23 Hydraulikmedium zu fördern, unterstützt die Druckvorspannung über den Trennkolben 45 auf das Hydraulikmedium die Förderarbeit. Über den Motor 33 an der Pumpe 35 muss nur der Druckunterschied zwischen dem Hydraulikraum 29 und dem Druck im Speicher 39 aufgebracht werden. Sollte der Motor 33 und damit die Pumpe 35 nicht fördern können, z. B. wegen eines Defekts der Energieversorgung des Motors 33, dann kann das druckvorgespannte Volumen bzw. der Speicher 39 über ein schaltbares Blockierventil 51 getrennt werden. Dazu ist das Blockierventil 51 innerhalb der ersten Anschlussleitung 37 der Pumpe 35 parallel geschaltet. Sinnvollerweise wird das schaltbare Blockierventil 51 nur dann in Durchlassrichtung geschaltet, wenn die Energieversorgung der Pumpe 35 gesichert ist. Z. B. durch eine einfache elektrische Reihenschaltung der Pumpe 35 zum Blockierventil 51 kann diese funktionale Abhängigkeit erreicht werden.

### Bezugszeichenliste

- 1: Federbein
- 3: Schwingungsdämpfer
- 5: Zylinder
- 7: Kolbenstange
- 9: Kolben
- 11: kolbenstangenseitiger Arbeitsraum
- 13: kolbenstangenferner Arbeitsraum
- 15: Ausgleichsraum
- 17: Boden
- 19: Anschlussorgan
- 21: erster Federteller
- 23: Feder
- 25: zweiter Federteller
- 27: Kolben
- 29: Hydraulikraum
- 30: Gehäuse
- 31: Hydraulikversorgungssystem
- 33: Motor
- 35: Pumpe
- 37: erste Anschlussleitung
- 39: Speicher
- 41: zweite Anschlussleitung
- 43: Anschlussöffnung
- 45: Trennkolben
- 47: Gasraum
- 49: Anschlag
- 51: Blockierventil

## Patentansprüche

1. Verstellbares Federbein (1), umfassend eine Feder (23), die zwischen zwei Federtellern (21; 25) verspannt ist, wobei die Vorspannung der Feder (23) über mindestens einen der beiden Federteller (25), der axial verschiebbar ist, einstellbar ist, indem ein Hydraulikraum (29) einen Kolben (27) aufweist, der mit dem verschiebbaren Federteller (25) in Wirkverbindung steht, wobei der Hydraulikraum (29) mit einem Hydraulikversorgungssystem (31) verbunden ist, mit einem Schwingungsdämpfer (3), der mindestens einen mit einem hydraulischen Dämpfmedium gefüllten Arbeitsraum (11, 13) aufweist, in dem eine Kolbenstange (7) eine axial Verdringerbewegung ausführt, wobei ein Ausgleichsraum (15) das von der Kolbenstange (7) verdrängte Dämpfmediumvolumen kompensiert,
**dadurch gekennzeichnet,**
**dass** das Hydraulikversorgungssystem (31) eine Pumpe (35) umfasst, der ein Speicher (39) mit einer Druckvorspannung vorgeschaltet ist und der Ausgleichsraum (15) des Schwingungsdämpfers (3) an den Speicher (39) des Hydraulikversorgungssystems (31) angeschlossen ist, wobei die Funktion des Ausgleichsraums (15) und des Speichers (39) von einem einzigen druckvorgespannten Volumen ausgeführt wird und eine erste Anschlussleitung (37) vom Speicher (39) zum Hydraulikraum (29) und eine zweite Leitung (41) vom Speicher (39) zum Arbeitsraum (11; 13) hydraulisch parallel geschaltet sind.

2. Verstellbares Federbein nach Anspruch 1,
**dadurch gekennzeichnet,**
**dass** ab einer definierten Einfahrposition der Kolbenstange (7) das druckvorgespannte Volumen ein Maximum einnimmt und bei einer weiteren Kolbenstangeneinfahrbewegung das verdrängte Volumen gegen die Kraft der Feder (23) vom sich vergrößernden Hydraulikraum (29) aufgenommen wird.

3. Verstellbares Federbein nach Anspruch 1,
**dadurch gekennzeichnet,**
**dass** das druckvorgespannte Volumen über einen Trennkolben (45) zu einem Vorspannelement separiert wird.

4. Verstellbares Federbein nach Anspruch 3,
**dadurch gekennzeichnet,**
**dass** der Trennkolben (45) mit einem Anschlag (49) zusammenwirkt, der das Maximum des druckvorgespannten Volumens bestimmt.

5. Verstellbares Federbein nach Anspruch 4,
**dadurch gekennzeichnet,**
**dass** der Anschlag (49) von einem Federelement bestimmt wird.

6. Verstellbares Federbein nach Anspruch 1,
**dadurch gekennzeichnet.**
**dass** in der ersten Anschlussleitung (37) die Pumpe (35) und dazu parallel ein schaltbares Blockierventil (51) angeordnet sind.

7. Verstellbares Federbein nach Anspruch 6,
**dadurch gekennzeichnet,**
**dass** das schaltbare Blockierventil (51) in die Durchlassrichtung geschaltet wird, wenn die Energieversorgung für die Pumpe (35) gesichert ist.

## Claims

1. Adjustable suspension strut (1), comprising a spring (23) which is braced between two spring plates (21; 25), wherein the prestress of the spring (23) can be adjusted by means of at least one of the two spring plates (25), which is axially movable, by virtue of a hydraulic chamber (29) having a piston (27) which is operatively connected to the movable spring plate (25), wherein the hydraulic chamber (29) is connected to a hydraulic supply system (31),
having a vibration damper (3) with at least one working chamber (11, 13) which is filled with a hydraulic damping medium and in which a piston rod (7) performs an axial displacement movement, wherein a compensating chamber (15) compensates the damping medium volume displaced by the piston rod (7),
**characterized**
**in that** the hydraulic supply system (31) comprises a pump (35), upstream of which is connected an accumulator (39) with a pressure prestress, and the compensating chamber (15) of the vibration damper (3) is connected to the accumulator (39) of the hydraulic supply system (31), wherein the function of the compensating chamber (15) and of the accumulator (39) is performed by a single pressure-prestressed volume, and a first connecting line (37) from the accumulator (39) to the hydraulic chamber (29) and a second line (41) from the accumulator (39) to the working chamber (11; 13) are connected hydraulically in parallel.

2. Adjustable suspension strut according to Claim 1,
**characterized**
**in that**, beyond a defined retraction position of the piston rod (7), the pressure-prestressed volume assumes a maximum, and during a further piston rod retraction movement, the displaced volume is received by the enlarging hydraulic chamber (29) counter to the force of the spring (23).

3. Adjustable suspension strut according to Claim 1,
**characterized**
**in that** the pressure-prestressed volume is separated with respect to a prestress element by means of a separating piston (45).

4. Adjustable suspension strut according to Claim 3,
**characterized**
**in that** the separating piston (45) interacts with a stop (49) which defines the maximum of the pressure-prestressed volume.

5. Adjustable suspension strut according to Claim 4,
**characterized**
**in that** the stop (49) is defined by a spring element.

6. Adjustable suspension strut according to Claim 1,
**characterized**
**in that** the pump (35), and parallel thereto, a switchable blocking valve (51), are arranged in the first connecting line (37).

7. Adjustable suspension strut according to Claim 6,
**characterized**
**in that** the switchable blocking valve (51) is switched into the pass-through direction when the energy supply for the pump (35) is assured.

## Revendications

1. Jambe de force réglable (1), comportant un ressort (23) qui est serré entre deux coupelles de ressort (21 ; 25), la précontrainte du ressort (23) pouvant être ajustée par l'intermédiaire d'au moins l'une des deux coupelles de ressort (25) qui est coulissante axialement, par le fait qu'un espace hydraulique (29) comprend un piston (27) qui est en liaison fonctionnelle avec la coupelle de ressort (25) coulissante, l'espace hydraulique (29) étant relié à un système d'alimentation hydraulique (31),
comprenant un amortisseur de vibrations (3) qui comprend au moins un espace de travail (11, 13) qui est rempli d'un fluide amortisseur hydraulique et dans lequel une tige de piston (7) effectue un mouvement de déplacement axial, un espace de compensation (15) compensant le volume de fluide amortisseur déplacé par la tige de piston (7),
**caractérisée en ce**
**que** le système d'alimentation hydraulique (31) comporte une pompe (35) en amont de laquelle est monté un accumulateur (39) doté d'une précontrainte de pression, et l'espace de compensation (15) de l'amortisseur de vibrations (3) est raccordé à l'accumulateur (39) du système d'alimentation hydraulique (31), la fonction de l'espace de compensation (15) et de l'accumulateur (39) étant effectuée par un seul volume précontraint par pression, et une première conduite de raccordement (37) de l'accumulateur (39) à l'espace hydraulique (29) ainsi qu'une deuxième conduite (41) de l'accumulateur (39) à l'espace de travail (11 ; 13) étant montées hydrauliquement en parallèle.

2. Jambe de force réglable selon la revendication 1,
**caractérisée en ce**
**que** le volume précontraint par pression est maximum à partir d'une position rentrée définie de la tige de piston (7), et le volume déplacé, lors d'un mouvement supplémentaire de rentrée de la tige de piston, est reçu, à l'encontre de la force du ressort (23), par l'espace hydraulique (29) qui s'agrandit.

3. Jambe de force réglable selon la revendication 1,
**caractérisée en ce**
**que** le volume précontraint par pression est séparé, par rapport à un élément de précontrainte, par l'intermédiaire d'un piston de séparation (45).

4. Jambe de force réglable selon la revendication 3,
**caractérisée en ce**
**que** le piston de séparation (45) coopère avec une butée (49) qui détermine le maximum du volume précontraint par pression.

5. Jambe de force réglable selon la revendication 4,
**caractérisée en ce**
**que** la butée (49) est définie par un élément de ressort.

6. Jambe de force réglable selon la revendication 1,
**caractérisée en ce**
**que** la pompe (35) et, parallèlement à cette dernière, une soupape de blocage (51) commutable, sont disposées dans la première conduite de raccordement (37).

7. Jambe de force réglable selon la revendication 6,
**caractérisée en ce**
**que** la soupape de blocage (51) commutable est commutée dans le sens de passage lorsque l'alimentation en énergie pour la pompe (35) est assurée.
